# EUROPÄISCHE PATENTSCHRIFT

(11) **EP 2 704 819 B1**
(45) Veröffentlichungstag und Bekanntmachung des Hinweises auf die Patenterteilung: **24.08.2016**
(21) Anmeldenummer: 12726578.3
(22) Anmeldetag: 07.05.2012
(51) Int. Cl.: B01D 53/85, C04B 18/02, C05D 3/02, C05G 1/00

(54) **GERÜSTMATERIAL FÜR BIOLOGISCH RECYCLINGFÄHIGE REAKTIVFILTER UND VERFAHREN ZU SEINER HERSTELLUNG**
FRAMEWORK MATERIAL FOR A BIOLOGICALLY RECYCLABLE REACTIVE FILTERS AND METHOD FOR PRODUCING SAME
MATÉRIAU DE STRUCTURE POUR FILTRES RÉACTIFS BIOLOGIQUEMENT RECYCLABLES ET PROCÉDÉ DE FABRICATION DUDIT MATÉRIAU

(30) Priorität: 06.05.2011 DE 102011050167
(43) Veröffentlichungstag der Anmeldung: 12.03.2014
(73) Patentinhaber: Ugn -umwelttechnik GmbH, 07549 Gera (DE)
(72) Erfinder: ZOELSMANN, Herbert, 07557 Gera (DE)
(74) Vertreter: Neidl-Stippler, Cornelia
(86) Internationale Anmeldenummer: PCT/DE2012/100128
(87) Internationale Veröffentlichungsnummer: WO 2012/152269

(56) Entgegenhaltungen:
- WO-A1-96/13321
- DE-A1- 19 859 443
- DE-A1-102006 035 287
- US-A1- 2005 084 949

## Beschreibung

Die Erfindung betrifft ein Gerüstmaterial für biologische recyclingfähige Reaktivfilter, also ein Gerüstmaterial insbesondere für Reaktivfilter, das für die Reinigung von speziellen Luft- und Gasgemischen (insbesondere zur Reinigung von Gasen mit Schwefel-, Ammonium- und organischen Chlor- und Fluorkohlenwasserstoffverbindungen, aber auch Mikroorganismen) modifizierbar ist. Dabei werden unter Schwefelverbindungen anorganische und organische Sulfide und Hydrogensulfide sowie Schwefelwasserstoff verstanden.

Die Reaktiv-Filtration, überwiegend bekannt als technisches Verfahren zur katalytischen Bearbeitung/Zersetzung von Stoffen in einem Fluidstrom, wird zunehmend auch auf Verfahren mit biologischen und chemischen Reaktionen, häufig gekoppelt mit physikalischer Adsorption übertragen. Bei den Gasreinigungsverfahren geht es nicht um eine rein mechanische Stofftrennung, sondern um reaktive Prozesse mit Gasbestandteilen - bspw. den biologisch/chemischen Abbau und Adsorption von Inhaltsstoffen des Gasstroms.

Es ist vorteilhaft, einen Prozess der rein physikalischen Adsorption mit biologischen und physikochemischen (Abbau)Reaktionen zu ergänzen, da so die Reaktiv-Filterüberwiegend energetisch optimal in der Gesamtenergiebilanz und umweltverträglicher in der CO₂-Gesamtbilanz sind. Diese Filter speichern zumindest einen Teil des adsorbierten Material nicht nur, sondern setzen es auch zu anderen, u. a. nutzbaren oder unschädlichen Substanzen um. Dadurch sind sie zumindest teilweise selbst-regenerierend.

Allerdings haben bisherige reaktive und insbesondere biologische Reaktiv-Filterverfahren sehr oft die Besonderheit, dass sie in ihrem optimalen Wirkungsgrad an sehr eng definierte Betriebsbedingungen gebunden sind, somit für alternierende Prozessbedingungen in technische Anwendungen nicht ausreichend angepasst werden können und daher nur einen begrenzten Wirkungsgrad aufweisen.

Durch veränderte industrielle Prozesse, insbesondere auch im Bereich der erneuerbaren Energien nehmen die Ansprüche an die Gebrauchs- und Umweltverträglichkeitseigenschaften und die Komplexität von Emissionen zu. Somit entstehen einerseits immer höhere emittierte Frachten in Gasströmen aus Verbrennung oder anderen reaktiven Prozessen, wie Gärung, Faulung und Klärprozessen oder der biologischen Herstellung von alternativen Brennstoffen, wie Alkoholen oder Kohlenwasserstoffen, bspw. Methan, andererseits sollen diese Gasströme hochgereinigt in die Umwelt entlassen werden. Es entstehen immer komplexere Stoffgemische mit immer höheren Anforderungen an die Gas- und Abluftreinigung.

Leider wird die Adsorption von Luftschadstoffen, bspw. H₂S, flüchtigen Säuren, Halogenkohlenwasserstoffen und flüchtigen organischen Komponenten (VOC) an den herkömmlichen Adsorptionsfiltern von zum Teil konkurrierenden Adsorptionsisothermen eingeschränkt und führt zu schnellen Verbrauch der Filter.

Ein Nachteil herkömmlicher Luftreinigungsverfahren ist deren mangelnde Anpassbarkeit an komplexe Gasgemische. Somit wird zunehmend zur Erzielung der notwendigen Betriebsbedingungen und Umweltauflagen auf steigende Anwendung von Aktivkohle, Keramik und andere, teure Verfahren, wie (Nach)Verbrennung ausgewichen, welche Substanz-unspezifisch sind.

Diese Verfahren sind Stand der Technik und wenden aufgrund der notwendigen grossen Mengen an unspezifischem nicht regenerationsfähigem Adsorptionsmaterial - meist Aktivkohle an. Dies ist zunehmend aufwendiger. Falls die Schadgase verbrannt werden müssen, wird viel Verbrennungsenergie benötigt. Weiterhin haben die bekannten Verfahren den Nachteil, dass sie kaum bzw. keine Abbauzwischenstufen zu brauchbaren Produkten ermöglichen. Bei der Verwendung von speziellen Adsorbentien können diese meist nur einmalig beladen und allenfalls ggf. extern regeneriert werden, aber meist nur so eingesetzt werden, dass nur bestimmte definierte Stoffe aus emittierender Gasen sowie Verbrennungs- oder Abluft entfernt werden können.

Die bisher angewandten Verfahren mit konkurrierenden Adsorptionsisothermen an gleichem Adsorptions-Material eignen sich nur gut für trockene Gase, denn die Feuchtigkeit selbst konkurriert an den Bindungsstellen. Dies bedeutet, dass sich die Effizienz von klassischem unspezifischem Adsorptionsmaterial bei Einsatz mit feuchtem Gas verschlechtert oder sich sogar ein reaktionshindernder Biofilm im Adsorptionsmaterial bildet, welcher die Schadstoffe aufnehmenden Poren verschliesst. Eine vorgeschaltete Gastrocknung, wie in solchen Fällen üblich, wirkt sich negativ auf die Energiebilanz des Gesamtverfahrens aus und erfordert zusätzliche, aufwändige Maßnahmen.

Bekannt ist, Fasermaterial - in Form von Netzen (Tüchern), Filzen oder Vliesen als Filtermaterial einzusetzen. Viele derartige Lösungen im Filtrationsbereich beruhen auf dem Einsatz von natürlichen Fasern, wie Cellulosefasern - sei es im Haushalt (Kaffee-/Teefilter), in Labor- und Technikumsanwendungen in der Chemie, der Biotechnologie und der Mikrobiologie oder der Verfahrenstechnik. Hierbei wird Filtrat (fluide) und/oder Filterrückstand (fest) auf dem Filter gewonnen. Meist ist entweder Filtrat oder Filterrückstand ein Wertstoff, welcher durch Filtration angereichert (Feststoff) oder gereinigt (Flüssigkeit) wird.

Ebenso ist bekannt, dass faserige Filtermaterialien durch Zusatz von Zuschlagstoffen oder Stabilisatoren formstabil und ggf. auch pH-Wert-stabil gemacht werden können. Dazu kann ein Zusatz an anorganischen Fasern oder Körperchen (bspw. Steinwolle, Zeolithe, Calciumsulfat=Gips; Kalk oder Dolomit), ggf. mit anorganischem Bindemittel, eingemischt werden (s. DE 20 2008 003 542 U1).

Typische bekannte Filter für "Biologische Abfallgase" sind Abluft- oder Umluftfilter in Küchen. Dabei kommen oft Materialkombinationen zum Einsatz. Ein Vorfilter dient zur Abscheidung von Aerosolen (Fett), während der Hauptfilter zur Sorption von dampf- oder gasförmigen Geruchs- oder Schadstoffen dient. Im Hauptfilter werden in der Regel Schüttungen aus Aktivkohle eingesetzt.

Eine besondere und noch relativ junge Anwendung ist der Einsatz stückiger, nicht granulierter, biologisch aktiver Materialien in großflächigen Abluftfiltern zur Reinigung großer Abluftmengen aus biologischen Verfahren. Diese Filter werden für Ausdünstungen von Abwasserschächten, der Tierproduktion (Massentierhaltungsställe), Klärschlammtrocknungsanlagen und Biogasanlagen eingesetzt. Derartige Abluftfilter, insbesondere als "Biofilter" bezeichnet, werden üblicherweise als großflächige Filteranlagen mit einem Gemisch aus Rindenmulch, geschreddertem Wurzelholz und anderem, nicht kontaminiertem Abfallholz gefüllt und zur Geruchbeseitigung/Abluftreinigung in Anlagen der Intensivtierhaltung, der Lebensmittelproduktion, der Tierkörper- und Speiserestverwertung sowie von Klärschlammtrocknungsanlagen u.ä. eingesetzt. Die eingesetzten Materialien sind preiswert und in relativ großen Mengen verfügbar. Nachteilig ist die Inhomogenität des strukturbildenden holzartigen Materials, was zu einer ungleichmäßigen Durchströmung führt. Hier sind nur wenige, weitgehend festgelegte chemisch-physikalischen Eigenschaften der Filterfüllstoffe angeboten, die noch dazu oft nur geringe Aufnahme- und Abbaukapazität der Filterschüttung (Mengeneinheit Schadstoff pro m³ Filterschüttung) haben. Derartige Filter können bspw. keine stark geruchsintensiven Abluftbestandteile wie Buttersäure und schwefelorganische Luftinhaltsstoffe binden. Vorteilhaft an holzfaserartigen Filtern ist lediglich, dass diese leicht entsorgbar sind und als solche keinen Sondermüll darstellen, sie genügen aber häufig nicht den entsprechenden Anforderungen an geruchsfreien Emissionen.

Die sog. Biofilter sind oft für die Reinigung großer Gas- und Abluftmengen ausgelegt und erreichen bereits heute zum Teil gute Abbauraten durch Reaktion der Gaskomponenten mit dem Holz oder darauf siedelnden Mikroorganismen. Sie sind jedoch, wenn überhaupt, nur begrenzt in der Lage, auf Konzentrations-, Feuchtigkeits- und Temperaturschwankungen sowie zyklische Volumenströme mit unterschiedlichen Schadstoffbeladungen in erforderlicher Qualität und Betriebssicherheit zu reagieren. Jeder genannte Einflussfaktor kann allein oder im Zusammenwirken mit anderen Faktoren den Wirkungsgrad zum Teil erheblich beeinflussen. Filterversagen/Durchbrüche sind die Folge. Die geruchs- und schadstoffbeladene Rohluft unterliegt also nicht vorhersehbaren umwelt- oder prozessbedingten Veränderungen. Die meisten bestehenden Filtereinrichtungen, insbesondere biologische, zur Gas- und Abluftreinigung sind generell mit diesem Problem behaftet und es kann nur annähernd mit hohem Überwachungs-, Steuerungs-, Betriebs- und Energieaufwand dieser Situation Rechnung getragen werden. Schliesslich sind diese Rinden-Biofilter nicht pH-Wert stabil und versauern leicht, was ihre Funktion stark beeinträchtigt.

Eine weitere, ständig an Bedeutung gewinnende Anwendung von Biofiltern ist die Reinigung von Biogas. Das in dem durch anaeroben Abbau von Biomasse durch Methanbakterien gewonnenen Gas besteht im Wesentlichen aus Methan (45 - 80 %) und Kohlenstoffdioxid (20 - 55%) sowie unterschiedlichen Mengen Schwefelwasserstoff. Das Biogas ist feuchtigkeitsgesättigt, weist also H₂O auf. Der stets vorhandene Anteil von Schwefelwasserstoff (bis zu > 10.000 Vol.-ppm) ist als starkes Gift und wegen der Korrosionseigenschaften in Verbrennungsanlagen, wie Blockheizkraftwerken, für die weitere Nutzung des Biogases möglichst effektiv zu entfernen. Ferner kann Biogas noch geringe Mengen an aromatischen Kohlenwasserstoffen sowie geruchsintensive schwefelorganische Verbindungen aufweisen.

Das Biogas kann u.a. durch aufwändige Waschverfahren von CO₂ und H₂S weitgehend befreit werden, wie es zum Beispiel bei der Herstellung von Bioerdgas/Biomethan durchgeführt wird.

Bei Bioerdgas werden diese biologisch hergestellten Gase - insbesondere in Bezug auf CO₂ und H₂S sowie die Kohlenwasserstoffe, organischen Säuren und Alkohole gereinigt durch Varianten wie die Nachschaltung einer externen Entschwefelung auf Aktivkohle-Basis (reiner Adsorptionsvorgang).

Ein weiteres, aus dem Abbau nachwachsender Rohstoffe stammendes Gas ist das Biomassevergasungsgas, bei dem biologisches Material thermisch unter Entwicklung gasförmiger Produkte bearbeitet wird - z.B. Holzvergasung oder aber FICFBG-Verfahren oder eine Dampfentgasung mit Wirbelschichtreaktor. Aus der Biomassevergasung stammende Gase enthalten dann H₂, H₂S, CO, CH₄, N₂, C₂H₄, C₃ - C₆-Verbindungen, Teer. Diese aus der Vergasung stammenden Gasgemische sind auch durch einen Gehalt an höheren Kohlenwasserstoffen gekennzeichnet.

Hinsichtlich der verschiedenen Zusammensetzung der Biogase wird auf "die DVGW-BGW-Studie "Analyse und Bewertung der Nutzungsmöglichkeiten von Biomasse" Band 1: Gesamtergebnisse und Schlussfolgerungen (Wuppertal Institut) von November 2005 hingewiesen, auf die zur Vermeidung von Wiederholungen in vollem Umfang bezug genommen wird.

Schliesslich bestehen Syntheseverfahren, die mit Archaeen - also Mikroben, die unter anderem die lebensfeindliche Umgebung von Tiefsee-Vulkanen besiedeln, die aus CO₂ und Wasserstoff Kohlenwasserstoffe herstellen können. Während sich die Mikroorganismen ernähren, produzieren sie hauptsächlich Methan.

Es bestehen auch chemische Synthese-Reaktionen, die Wasserstoff und CO₂ umsetzen.

Alle diese Verfahren produzieren gasförmige, in der Regel geruchsintensive Produkte und Nebenprodukte, die zu entfernen sind.

Ein weiteres Problem ist die Entfernung von NH₃ aus Gasmischungen. Schliesslich sind cancerogene aromatische Kohlenwasserstoffe sowie ggf. halogenierte Kohlenstoffverbindungen zu entfernen, die im Gegensatz zu H₂S oder NH3 hydrophob sind. Bisher gibt es Filtermaterialien, welche einzelne Komponenten entfernen konnten -für jede Schad-stoffkomponente mussten aber aufwändig neue Lösungen gefunden werden.

Ferner ist es erwünscht, Bakterien, Pilzsporen u. dgl. aus Luftströmen (bspw. aus der Intensivtierhaltung oder Kliniken) zwecks Analyse derselben einzufangen oder aber zu entfernen. Dazu wurden bisher Filter eingesetzt, deren Porengrösse kleiner als die Bakteriendurchmesser war und welche Mikroorganismen aufgrund der Grössenverhältnisse aussonderten.

Aus der US 2005/0084949 A1 ist ein Biofiltermaterial bekannt geworden, welches komplex aus einem anorganischen porösen Kern mit aufgebrachter hydrophober Schicht mit Schadstoffe abbauenden Mikroorganismen in organischem Material bekannt geworden, das regenerativ gasförmige Sulfide und volatile organische Substanzen abbauen kann. Aufgrund des komplexen Aufbaus ist das Material schwierig herzustellen und problematisch in der Entsorgung.

Die DE102006035287 A1 offenbart eine Biofiilterzusammensetzung zur biologischen Reinigung von Medien, u.a. Gasen, die natürliche Fasern in Form von Zellulosegranulat enthalten kann sowie Eisenoxyhydrat und ggfs. Adsorbentien wie z.B. Zeolite und biologisch verträgliches anorganisches Bindemittel in Form von Kalkmehl. Das Material kann mit Thiobacter-Bakterien beimpft werden und in Formkörpern vorliegen.

Es ist daher Aufgabe der Erfindung, verbesserte Filtermaterialien zur Gasreinigung vorzuschlagen, die effizient und umweltverträglich Schadstoffe aus dem Gasstrom entfernen können und die Nachteile des Standes der Technik vermeiden.

Die Aufgabe wird durch ein Gerüstmaterial mit den Merkmalen des Anspruches 1 gelöst. Vorteilhafte Weiterbildungen ergeben sich aus den abhängigen Ansprüchen.

Es wird somit ein Gerüstmaterial für biologisch recyclingfähige Reaktivfilter geschaffen, das einen Gehalt an Fasern und einen Gehalt an biologisch verträglichem porösem Stabilisierungszusatz sowie an einem anorganischen Bindemittel, das für den Zusammenhalt der Struktur sorgt, aufweist, wobei die Kombination eine Besiedelung mit Mikroorganismen und/oder eine Einmischung von Modifikationsmaterialien, wie Adsorptionsmittel, Nährstoffe, pH-Wert Modifizierer und/oder katalytische Materialien ermöglicht und in feuchter Umgebung strukturstabil ist.

Das Gerüstmaterial weist 55 % - 63 % porösen Stabilisierungszusatz und 37 % - 45 % natürliche Fasern auf. Es ist modifiziert, wobei das Modifikationsmaterial durch Imprägnierung und Mischung in die Gerüstmaterialausgangsstoffe eingebracht ist.

Es ist günstig, dass das.Gerüstmaterial im wesentlichen nicht quellfähig, aber wasserrückhaltefähig ist.

Häufig ist es vorteilhaft, dass das Material in Formkörpern vorliegt. Dadurch ist ein relativ leichter Gasdurchtritt möglich und Zusetzen des Filters kann behindert werden.

Anorganische anorganische poröse Stabiiisierungszusätze sind ausgewählt ist aus der Gruppe bestehend aus Dolomit, Kalksandstein.

Eine Verwendung des Gerüstmaterials als Zuschlagstoff zu Baumaterialien, als Dünger, Bodenstabilisator, Wärme-Dämmstoff, Schalldämmung ; als Grundstoff zur Isolierung von Bakterien- und Pilzsporen aus Gasströmen und als Filtermaterial zur Gasreinigung ist möglich.

Das Gerüstmaterials ist in einfacher Weise herstellbar durch Mischen von biologisch unbedenklichen Fasern; porösem anorganischem Material; anorganischem unbedenklichem Bindemittel; Additiven zu einer teigigen Mischung; Formen der Mischung in einem Umformvorgang und Trocknen der Mischung unter Herstellung von Gerüstmaterialkörpern.

Die Erfindung bezieht sich also auf Gerüstmaterial für biologisch recyclingfähige Reaktivfilter sowie damit produzierte Körper zur Verwendung in der Gas- und Luftreinigung. Das erfindungsgemäße Material ist weitestgehend nassfest, biologisch unbedenklich und leicht wieder zu verwerten bzw. zu entsorgen.

So ist ein erfindungsgemäßes Gerüstmaterial zur Reinigung von auch hoch belasteten nassen Gasen und Abluft mit z.B >10.000 ppm H₂S geeignet.

Die damit hergestellten Filterkörper weisen im wesentlichen nicht quellfähiges, insbesondere natürliches formstabiles Material auf, das überwiegend aus einer Mischung anorganischen natürlichen Materials als Stabilisator und Bakterienaufnahme, einem ggf. pH-stabilisierenden Stoff mit Fasern - insbesondere natürlichen Fasern, wie Steinwolle, Holzfasern, Cellulosefasern aus der Papierindustrie, pflanzlichen Fasern verschiedenster Herkunft besteht. Diese Materialien bewirken einerseits den Zusammenhalt des Filters und können andererseits adsorptiv reaktive Komponenten des Filters beheimaten.

Diese Grundstruktur kann überraschernderweise - im Gegensatz zu herkömmlichen gattungsgemäßen Filtern - entsprechend ihrem geplanten Einsatz modifiziert werden. Eine Anpassung kann bspw. durch Einstellung des pH-Wertes des Filtermaterials erfolgen, welches sich dann für die Besiedelung mit speziellen Mirkoorganismen bzw. zur Adsorption spezieller Gase besonders eignet. So wünschen bspw. Mercaptobacter, die Schwefelverbindungen oxidieren können, ein recht saures Medium. Ganz besonders bevorzugt ist das Gerüstmaterial sowie die Zusätze biologisch unbedenklich, um die nachfolgende Verwertung - bspw. Kompostierung - zu ermöglichen.

Das Material ermöglicht die Ansiedlung von Mikroorganismen sowie Pilzen und deren Versorgung mit Luftinhaltsstoffen, Spurenelementen und Wasser. Mikroorganismen, welche z.B. Schwefelwasserstoff oder aber bestimmte Kohlenwasserstoffe oder sogar NH₃ abzubauen vermögen, bewirken die Regeneration der Modifikationsagenzien des Gerüstmaterials, was zu erheblich verlängerten Standzeiten desselben im Gegensatz zu reinen Adsorptionsfiltern führt. Das so modifizierte Material erweitert diese Eigenschaften entsprechend der Reaktionsstoffeigenschaften des Derivatisierungssstoffes auf die chemische und/oder physikalische Sorption der Störstoffkomponente im Gas- oder Luftgemisch.

Das Modifikationsreagenz kann flüssig oder pulverförmig sein. Als Modifikationsagentien eignen sich bspw. je nach Bedarf und Anwendungsfall die Zugabe von Eisen (II-III) oxidhydrat, welches auch zur pH-Wert-Modifikation eingesetzt werden kann. Eisenoxid-Hydrate, ggf. mit den natürlicherweise mit Eisen gemeinsam auftretenden geringen Mengen/Spuren an Eisenbegleitstoffen, wie Manganoxiden, sind insbesondere für die reaktive Umsetzung von Schwefelverbindungen und zum Binden von Siloxanen geeignet (Entschwefelungsanlagen). Die Eisenoxidhydrate werden gemeinsam mit dem erfindungsgemässen Filtergerüstmaterial eingesetzt. Die bekannte katalytische Wirkung des Übergangsmetalls Eisen und seiner Begleitstoffe beim Abbau von Sulfiden, nitrosen Gasen und sonstigen Stickstoffverbindungen zu unschädlichen und biologisch problemlosen Verbindungen kann hier zur Herstellung eines leicht zu verwertenden oder zu entsorgenden Filtermaterials eingesetzt werden.

Zur besseren Formbarkeit und Verbindung der Materialien wird anorganisches, nicht filmbildendes Bindemittel dem Grundmaterial zugesetzt, ausgewählt aus der Gruppe Zement, Ca(OH)₂ Die Vorteile des erfindungsgemässen Materials liegen darin, dass ein Reaktiv-Filtergerüstmaterial bereitgestellt wird, in dem
- chemische Reaktionen ablaufen können,
- gezielt Wasser ohne wstl. Aktivitätsverlust zurückgehalten und gespeichert wird und
- die Ansiedlung von Mikroorganismen unterstützt wird,
- das einfach an viele Schadstoffe durch Modifikation anpassbar ist
- das biologisch unbedenklich ausgestaltet sein kann
- vollständig unproblematisch auch nach dem Einsatz recyclingfähig ist.

Die spezifische Oberfläche und auch Quellfähigkeit des Materials (Bestimmung nach BET) ist einstellbar. Die spezifische Oberfläche und das innen verfügbare Porenvolumen werden bestimmt durch die Körnung und den spezifischen Mengenanteil der Derivatisierungsstoffe sowie den Wassergehalt des Basismaterials vor der Trocknung, welche entsprechend gemessen und dann modifiziert werden können.

Es können also als wesentliche Vorteile des Materials genannt werden:
1. Bodenverbesserungsmaterial (da es ein Wasserspeicher ist, auch in Abhängigkeit des Faseranteils, falls dieser Wasser speichert)
2. Stapelbarer Dünger (auch unter Zugabe von Spurenelementen und/oder Gärresten aus Biogasanlagen)
3. Schalldämmmaterial (bsp. als Schüttung für Holzbalkendecken in Altbauten), auch in den Filteranlagen
4. Staub- und Partikelentfernung aus dem Gasstrom (da das Material feucht gefahren wird bzw. über eine separate Befeuchtung befeuchtet wird)
5. Wärmedämm-Material

Die im Filtermaterial vorliegenden Fasern bestimmen die Strukturstabilität sowie - teilweise - das Wasserrückhaltevermögen. Der Faserteil des Trägermaterials ist besonders bevorzugt durch Naturfasern - wie Cellulose, Lignocellulose, Viskose, Wolle, Seide, Papierreststoffe , Pflanzenfasern, Textilrückstände und ähnliches, wie es dem Fachmann geläufig ist, zu bilden. Bei der Wahl des Trägermaterials ist der Einsatzzweck des modifizierbaren Filtermaterials zu berücksichtigen. Beispielsweise kann die Resistenz gegenüber einem bestimmten Reaktivstoff oder einer darin enthaltenen Störkomponente für die Auswahl entscheidend sein.
Gleichzeitig stellen sie die verfügbaren Grenzflächen für mikrobielle Besiedlung bereit - dies kann aber auch durch zugemischte besiedelungsfähige Materialien ergänzt werden. Das Filtermaterial ist sehr gut für den Einsatz in Festbettreaktoren geeignet und trägt zur Optimierung derartiger Verfahren bei. Insbesondere zeichnet sich im Vergleich zu Aktivkohle das erfindungsgemäße Material dadurch aus, dass bevorzugt nasse Gase gereinigt werden können.

Gegenüber Aktivkohle ist die Volumenbelastbarkeit des Materials um ein Mehrfaches höher, die Materialstandeigenschaften sind über lange Zeit stabil und die Energieverbräuche können durch Durchströmungs- und Wasserspeicherungsoptimierung gesenkt werden. Die bekannten Vorteile von Festbettverfahren werden dabei genutzt. Vorzugsweise wird die Mischung der Gerüstträgermaterialien zu Presskörpern geformt. Dies kann bspw. durch Strangpressen erfolgen. Mit einer Schüttung solcher Formkörper sind verschieden gestaltete Filterbehälter problemlos befüllbar. Zur Erhöhung der Auflast- und Knickstabilität können die Formkörper auf einen Trockensubstanz-Gehalt für den Betriebszustand oder für den Lagerzustand durch Trocknen eingestellt werden. Zur Verarbeitung des Gerüstmaterials kommen auch andere formgebende Verfahren, wie Granulieren oder Brikettieren oder Rollieren in Frage.

Bei einer bevorzugten Ausführungsform des erfindungsgemässen Gerüstmaterials dient pelletiertes oder granuliertes Filtermaterial, das im wesentlichen aus einem Kalksandstein- und/oder Dolomit/Cellulose-Fasergemisch besteht, als Basismaterial zur biologischen Gas- und Abluftreinigung im in etwa neutralen Bereich. Durch Veränderung der Faseranteile und der Verwendung verschiedener Faserqualitäten sowie Zugabe von Derivatisierungs- und Modifikationsreagenzien können die Anwendungseigenschaften modifiziert werden.

Dieses Filtermaterial - bspw. eine Mischung aus Kalksandstein und Cellulosefasern mit Zusatz bzw. ein faseriges Trägermaterial und mindestens eine Eisenverbindung weist angesiedelte Populationen von Thiobacter- Mikroorganismen auf, die regenerierbar bestimmte Materialien abreagieren - bspw. H₂S wird durch Thiobacter- z.B. Sulfolobus oder Thiobacillus, zu Sulfat umgewandelt. Das Material kann auch eine Speicherung des H₂S an Eisenoxiden bis zur Umsetzung durch die Thiobacter bewirken. Das erfindungsgemässe Materials kann auf die chemische und/oder physikalische Sorption mindestens einer bestimmten Störkomponente aus einem reaktionsfähigen Material und/oder die Ansiedlung einer Population mindestens eines bestimmten Mikroorganismus abgestimmt gemischt werden. Durch diese Mischung ist mindestens eine Störkomponente des Gasstroms in mindestens eine andere Störkomponente oder mit mindestens einer Komponente der Mischung biologisch wandelbar (sie wird ausgefällt, oder abgebaut bzw. entfernbar) und das modifizierte Filtermaterial ist regenerierbar. So entsteht ein auf einen speziellen Einsatzzweck abgestimmtes regenerationsfähiges Filtermaterial.

Zur Erhöhung der Auflast- und Knickstabilität können die Formkörper dieser Ausführungsform auf einen Trockensubstanz-Gehalt für den Betriebszustand oder für den Lagerzustand auf > 85 % eingestellt werden (durch Trocknen).

Bevorzugt ist die Mischung so gebildet, dass sie eine Selbstansiedlung von Populationen ubiquitärer Mikroorganismen erlaubt oder begünstigt. Ubiquitäre Mikroorganismen kommen unter Normalbedingungen praktisch überall vor und müssen nicht aktiv angesiedelt werden, sondern siedeln sich unter auf sie abgestimmten Bedingungen bei entsprechendem Nährstoffangebot von selbst an. Alternativ können die Mikroorganismen auch aktiv angesiedelt werden.

Es ist aber auch möglich, falls ein saures Filtermaterial - z.B. für Mercaptobacter benötigt wird, poröse anorganische Zuschlagstoffe einzusetzen welche ebenfalls aufgrund ihrer porösen Struktuer optimale Besiedelungsbedingungen bieten.

In einer Ausführungsform für die Reinigung von Gasen aus Biogasanlagen mit Mikroorganismen umfasst die Mischung mindestens einen Hilfsstoff, beispielsweise Wasser oder wässrige Nährsalzlösung. Dadurch wird die Homogenisierung der Mischung verbessert. Das Mischungsverhältnis von natürlichen Fasern mit dem anorganischen Material (Kalksandstein und/oder Dolomit) bestimmt das Wasserrückhaltevermögen und im Falle von Kalk oder Dolomit den pH-Wert im Gerüst. Außerdem kann das Milieu für die Ansiedlung der Mikroorganismen verbessert werden, beispielsweise durch Bereitstellung bestimmter, von den Mikroorganismen benötigter Spurenelemente im Mischgut. Vorzugsweise werden Trägermaterial und das Derivatisierungsreagens und/oder der Hilfsstoff zur Bildung der Mischung homogenisiert, so dass sich eine gleichmäßige Verteilung des Derivatisierungsreagens' im Trägermaterial ergibt und sich so reproduzierbare Filtereigenschaften ergeben.

Ein besonderer Vorteil des erfindungsgemässen Materials ist seine Weiterverwendbarkeit. So kann es - sofern es keine bedenklichen Stoffe, wie chlorierte Kohlenwasserstoffe, enthält, bspw. als Baumaterial-Zuschlagstoff, als Düngemittel/Bodenverbesserer, Dämm Material für die Wärme- und/oder Schalldämmung eingesetzt werden, auch wenn es nicht mehr als Filtermaterial geeignet ist.

Falls es bedenkliche Stoffe aufweist, kann es thermisch unter Entstehen biologisch völlig unproblematischer Reste verwertet werden.

Es ist aber auch möglich, das Gerüstmaterial als Grundstoff für Bakterienfilter bzw. Pilzsporenfilter oder für Fallen zur Isolierung von Bakterien- und Pilzsporen aus Gasströmen einzusetzen, da Pilze und Bakterien sich gerne auf dem für sie günstigen Untergrund festsetzen, sich auch dort vermehren und somit leicht isolier- und identifizierbar sind. Dies ist bspw. bei der Überwachung von Gasströmen in der Lebensmittelindustrie, Tierhaltung oder in Kliniken und Praxen sinnvoll, da so festgestellt werden kann, welche luftgängigen Keime dort vorkommen.

Nachfolgend wird die Erfindung anhand von Ausführungsbeispielen, auf welche sie keineswegs eingeschränkt ist, sowie der Zeichnung näher erläutert. Darin zeigen:
Fig. 1 schematisch eine Filteranlage mit erfindungsgemässem Filtermaterial,
Fig. 2 die Filteranlage aus Fig. 1 in einem zwei Kolonnensystem (Beladungs- und Regenerationsphase), die mit einem Regenerativstoff gespült wird, und
Fig. 3 eine Filteranlage mit Schichten teils modifizierten, teils unmodifizierten Filtermaterials, die einen Reaktivstoff filtert; und.
Fig. 4 schematisch ein erfindungsgemässes Gerüstmaterial mit Besiedelung

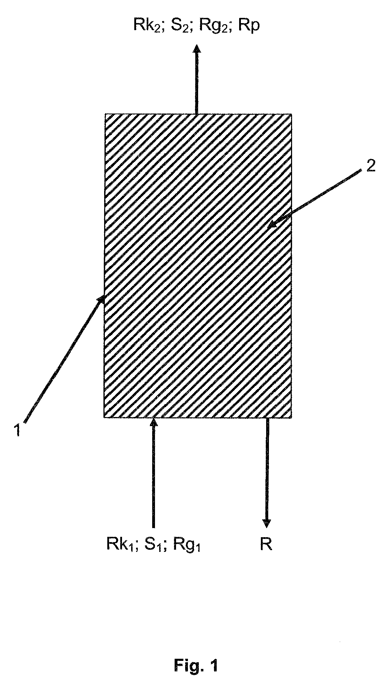

Fig. 1 zeigt schematisch eine Filteranlage 1 mit einem modifizierten Filtermaterial 2.2, das eine reaktionsfähige Störkomponente S reaktiv filtert, wie sie für die Gase aus Biogasanlagen und z.B. Klärschlammtrocknungsanlagen geeignet ist. S ist in diesem Falle H₂S. Das erfindungsgemässe Gerüstmaterial ist mit Thiobakterien besiedelt, welche das H₂S umsetzen können. Der mit Störkomponente S befrachtete feuchte Gasstrom Rk aus der be-zeichneten Anlage wird in die Filteranlage 1 eingeleitet, wo die Störkomponente S - hier H₂S oder ein anderer geruchsintensiver Stoff wie Buttersäure im modifizierten Filtermaterial teils physikalisch oder chemisch gebunden bzw. an den Fasern und/oder Eisenoxiden gebunden und/oder von dort siedelnden Mikroorganismen biologisch abgebaut wird. Im Ergebnis des Stoffwechsels der Mikroorganismen wird die Störkomponente S zu einem Reststoff R umgewandelt und ausgeschieden. Ein erheblich verringerter Restgehalt S₂ kann im gefilterten Gasstrom verbleiben, während das Stoffwechselprodukt der Mikroorganismen, R, ausgeschieden wird. Bei Zuführung des Regenerationsagens Rg wird dieses die Mikroorganismen oder sonstige reaktiven Zentren des Filters regenerieren und der nicht verbrauchte Anteil des Regenerationsagens Rgᵣₑₛₜ über den Filterauslass ausgeschieden.

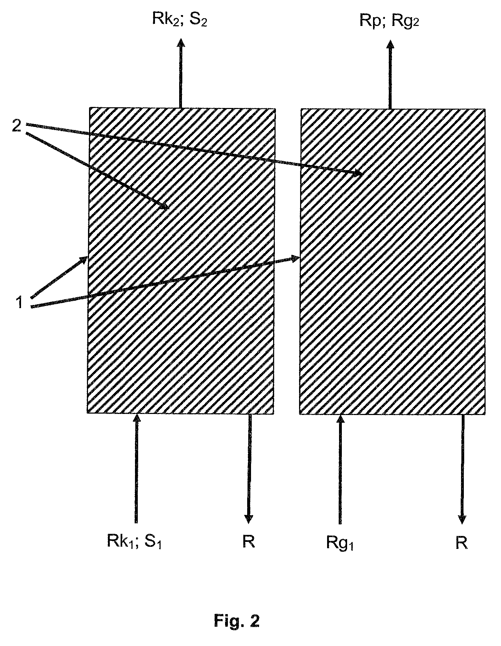

Fig. 2 zeigt schematisch die Regeneration des Filters 1 aus Fig. 1. Auf der rechten Seite der Fig. 2 wird nochmals schematisch der Filter im Einsatz bei der Filtration des Schadstoffes gezeigt. Der Schadstoff S₁ tritt mit einem Gasstrom mit einer Konzentration S₁ in das Filtermaterial 2 ein und verlässt es mit erheblich verringerter oder praktisch zu vernachlässigender Menge S₂. Ein Reststoff R - hier Wasser - wird ausgeschieden. Der Filter auf der rechten Seite der Figur 2 wird mit einem wässrigen Regenerationsmaterial Rg gespült, nachdem infolge der physikalischen oder chemischen Bindung der Störkomponente S (hier H₂S) eine Sättigung durch Schwefelverbindungen bzw. dessen Reaktionsprodukten im modifizierten Filtermaterial zumindest annähernd erreicht ist. Die Mikroorganismen verwenden nun die adsorbierte Störkomponente H₂S und liefern deren Reaktionsprodukte, wie Schwefel, Eisensulfide etc. gemäss ihrem Stoffwechsel, was durch den Regenerativstoff Rg zusätzlich begünstigt wird. Überschüssiger Reaktivstoff Rg rest wird ausgeschieden.

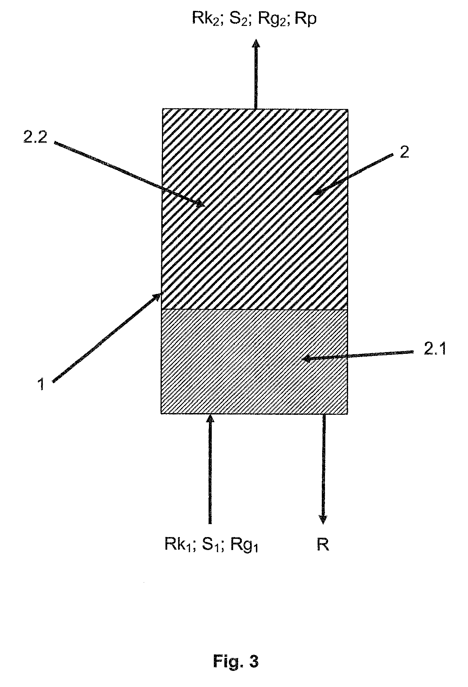

Fig. 3 zeigt nun eine Filteranlage 1 mit verschiedenen Schichten Filtermaterial. Hier wird unmodifiziertes Filtermaterial 2.1 mit einer Schicht modifizierten Filtermaterials 2.2, die einen chemisch umsetzbaren Stoff Rk (H₂S) reaktiv filtert, kombiniert. Durch diese Kombination wird im unmodifizierten Material eine reine Adsorption, bspw. von Wasser, stattfinden, während im modifizierten Filtermaterial 2.2. das H₂S zu harmloseren Produkten seitens der Thiobakterien abgebaut wird und ein gereinigter Reaktivstoff Rk, geringe Mengen nicht umgesetzten Schadstoffes S₂ und Reste unverbrauchten Regenerationsmaterials Rg rest ausgeschieden werden. Das Produkt der Reaktion im Filter, R, wird hier über einen Reststoffstrom ausgeschieden.

Vorzugsweise erlaubt das modifizierbare Filtermaterial 2 die Ansiedlung ubiquitärer Mikroorganismen, beispielsweise Thiobazillus. Alternativ können Mikroorganismen auch aktiv angesiedelt werden.

Das erfindungsgemässe Gerüstmaterial kann aber durch die Auswahl von Derivatisierungsreagenzien für die Filterung mehrerer verschiedener Störkomponenten S angepasst werden. So kann bspw. eine hydrophobisierte Gerüstmaterialschicht (bspw. durch Tränkung mit Ölen) zur Absorption flüchtiger organischer Komponenten (z.B. bei Abfallholzver-wertung), von Halogenkohlenwasserstoffen bei der industriellen Abluftreinigung allein oder zusätzlich mit einer weiteren dafür angepassten Schicht zum NH₃-Abbau/Absorption kombiniert werden, um alle diese Komponenten aus dem Gasstrom herauszufiltern. Das verbrauchte Filtermaterial kann, soweit es nicht mit problematischen Verbindungen, wie polyzyklischen Kohlenwasserstoffen oder halogenierten Verbindungen belastet ist, problemlos in der Landwirtschaft und in der Bauwirtschaft - z.B. zur Verfüllung von Böden - eingesetzt werden. Falls es belastet ist, kann es thermisch behandelt werden.

Die Filteranlagen können so ausgelegt werden, dass das modifizierte Filtermaterial über den Gas-/Abluftstrom temperiert ist, um die Reaktionsgeschwindigkeit zu optimieren. Bei Einsatz von Mikroorganismen eignet sich bspw. meist eine Temperatur zwischen 15°C und 45°C - allerdings bestehen auch solche, die bei erheblich höheren Temperaturen arbeiten können, für die der Temperaturbereich entsprechend anzupassen ist.

Der Stoffwechsel der Mikroorganismen und damit der Abbau der Störkomponente S oder ihrer Reaktionsprodukte sowie die Abscheidung des Reststoffs R kann auch ausschließlich durch das Derivatisierungsreagenz erfolgen, wobei das Gerüstmaterial nur einen physikalischen Zweck erfüllt.

Bei der Abluftreinigung von industriell belasteten Gasen findet eine unspezifische Adsorption statt - unabhängig vom Wassergehalt der Abluft.

### Ausführungsbeispiel 1

50 g Cellulosefasern einer Faserlänge von > 0,5 cm und einem Durchmesser von 0,1-0,5 mm werden mit 45 g pulversierten Dolomits und 3 g Ca(OH)₂ -Pulver unter Wasserzugabe zu einer hochviskosen Mischung gemischt und in einer Brikett-Presse zu Briketts einer Kantenlänge von 0,5 - 2 cm verpresst. Das so brikettierte Material wird in ein Filtergehäuse eingefüllt und bildet so eine für Mikroorganismen besiedelbare Filterschicht.

### Ausführungsbeispiel 2

45 g Holzfasern eines Faserdurchmessers von 0,05 - 0,5 cm und einer Faserlänge von > 0,5 cm werden mit 40g CaCO₃-Pulver und 2g Zementpulver, sowie Wasser, gemischt und in eine Strangpressanlage eingeführt. Dort wird ein runder Strang in Form von Pellets mit einem Durchmesser von z.B. 0,75 cm geformt, der auf Längen von ca 1 - 3 cm abgelängt wird.

Die Größe des brikettierten/pelletierten Filtermaterials kann anforderungsspezifisch variiert werden. Das Material eignet sich insbesondere zur Herstellung von Reaktivfiltern mit einem pH-Wert von 6 - 8.

### Ausführungsbeispiel 3

### Entschwefelungsverfahren für ungetrocknetes, nicht behandeltes Rohbiogas

Das feuchte zu entschwefelnde Biogas wird durch den Gaseingangsstutzen der Anlage über das Gerüstmaterial geführt und gereinigt.

Dieses besteht aus einer Mischung von 50 g Cellulosefasern einer Faserlänge von > 0,5 cm und einem Durchmesser von 0,1- 0,5 mm mit 45 g pulverisierten Dolomits, 3 g Ca(OH)₂ -Pulver sowie 53 g Eisenoxidhydrat, die unter Wasserzugabe zu einer hochviskosen teigigen Mischung gemischt und in einer Brikett-Presse zu Briketts einer Kantenlänge von 0,5 - 2 cm verpresst wurde. Dieses so brikettierte Material wurde in Filtergehäuse eingefüllt und bildet so eine für Mikroorganismen besiedelbare Filterschicht.

Anschließend verlässt das entschwefelte Biogas die Anlage über den Gasausgangsstutzen. Im Gerüstmaterial mit Eisenoxidhydrat wird der Schwefelwasserstoff sowohl chemisch als auch biologisch zu elementarem Schwefel und Sulfat oxidiert.

Ein Prozess der Biogasentschwefelung ist eine chemische Reaktion des Schwefelwasserstoffes (H₂S) mit dem in das Granulat eingebrachten mikro-strukturellen Eisen (Fe2+). Der Schwefel wird in Form von Eisensulfid (FeS) im Granulat gebunden. (Gl. 1)

**Fe²⁺ + H₂S - > FeS + 2H+** **(GI. 1)**

Neben dem chemischen Abbau wird der Schwefelwasserstoff auch direkt von sich im Granulat ansiedelnden Schwefelbakterien (SB) mittels Restsauerstoffs im Biogas (1 Vol%) oxidiert. (GI. 2)

**H₂S + 2O₂+ "SB" - > H₂SO₄** **(GI. 2)**

Gleichzeitig regeneriert der Restsauerstoff das entstandene FeS wieder zu Fe2+ (GI. 3), so dass gebundene Kapazitäten wieder frei werden und erneut Schwefelwasserstoff binden kann.

**FeS + 2H+ + 2O₂ - > Fe²⁺ + H₂SO₄** **(GI. 3)**

Durch die Kombination der chemischen und biologischen Entschwefelungsprozesse sowie der parallel ablaufenden Regeneration des Eisenanteils erzielt das Gerüstmaterial-Verfahren hohe Schwefelabreinigungsgrade, eine gesteigerte Prozessstabilität und geringe Betriebskosten bei Filtermaterialstandzeiten bis 3 Jahre.

Diese Entschwefelungsanlage besteht aus einem oder mehreren mit dem o.g. Gerüstmaterial befüllten Biogasfiltermoduln, einem Frischwasseranschluss, Kondensat-ablass, und zwei Gasanschlussstutzen mit entsprechenden Flanschen. Der Frischwasseranschluss und der Kondensatablass können über Kugelhähne manuell, pneumatisch oder elektronisch betätigt werden. Optional kann die Anlage mit Gasmesstechnik, den dazugehörigen Probenahmestutzen, einer Frischluftdosierung und Behältertemperierung ausgestattet werden.

Es handelt sich dabei um ein Entschwefelungsverfahren für Biogas, bei dem kein (zusätzlicher) Eintrag von Sauerstoff (Frischluft) in das Rohbiogas erfolgt.

Während des Biogasreinigungsprozesses durchströmt das Biogas das Filtermodul und Luft ein paralleles Filtermodul zur gleichzeitigen Regeneration. Das biogasdurchströmte Filtemodul reinigt über chemische Sorptionsprozesse im Gerüstmaterial das Biogas vom Schwefelwasserstoff. Parallel zur Biogasentschwefelung wird das zuvor beladene Filtermaterial des zweiten Moduls mit Luftsauerstoff ebenfalls über chemische und biologische Prozesse regeneriert. Während der Regeneration des Filtermaterials werden das Filtergranulat beladende Schwefelverbindungen aus dem Biogasreinigungs-prozess oxidiert, sodass die Entschwefelungsleistung des Filtermaterials fast 100%ig wieder hergestellt wird. Durch das Umschalten der Gasströme (Biogas/Regenerationsluft) und der Prozesse Biogasreinigung/ Filtermaterialregeneration zwischen den zwei BGM wird das Biogas kontinuierlich entschwefelt und das Filtergranulat wechselseitig regeneriert. Ein Filtermaterialverbrauch und irreversibles einmaliges Beladen durch Schwefelwasserstoff wie bei den herkömmlichen Aktivkohlefiltern tritt nicht ein. Das Filtergranulat muss erst dann gewechselt werden, wenn die Regenerationszeit länger als die Beladungszeit ist. Der Hauptprozess der Biogasentschwefelung ist eine chemische Reaktion des Schwefelwasserstoffes (H₂S) mit zweiwertigem Eisen (Fe²⁺) im Granulat. Der Schwefel wird in Form von Eisensulfid (FeS) im Granulat gebunden. **(GI.** 1)

**Fe²⁺ + H₂S - > FeS + 2H+** **(GI. 1)**

Während der Regeneration wird das durch die Entschwefelung entstandene FeS mit Hilfe von Luftsauerstoff (02) wieder zu Fe2+ regeneriert. (GI. 2)

**FeS + 2H⁺ + 2O₂- >Fe²⁺ + H₂SO₄** **(GI. 2)**

Die Regenerationsreaktion verläuft wie die Biogasreinigung chemisch und mikrobiologisch. Der mikrobiologische Anteil des gesamten Regenerationsprozesses ist als relativ hoch zu bewerten, da FeS von vielen Bakteriengruppen (Sulfidoxidierer) als Elektronenquelle für ihren Energiewechsel genutzt wird.

### Anlagenbestandteile

Die Anlage besteht aus zwei, mit Gerüstmaterial/Filtermaterial befüllten, parallel geschalteten Biogasfiltermodulen (BGM), der internen Verrohrung inkl. Armaturen, Wärmetauscher, Steuerungstechnik und Ventilator.

### Bezugszeichenliste

- 1: Filteranlage
- 2: Modifizierbares Filtermaterial
- 2.1.: unmodifiziertes Filtermaterial (Basismaterial)
- 2.2.: modifiziertes Filtermaterial, Bsp. H₂S
- R: Reststoff, Bsp. Kondensat
- Rg₁: Regenerativstoff (Eingangskonzentration), Bsp. O₂
- Rk: zu reinigender Reaktivstoff, Bsp. Biogas, Industrieabluft
- S₁: Störkomponente, erste Konzentration
- S₂: Störkomponente, Bsp. H₂S, org. Halogenverbindungen, zweite geringere Konzentration
- Rg₂: verbleibender Reaktivstoff nach Reaktivfiltration
- Rp: Regenerationsprodukt

## Patentansprüche

1. Gerüstmaterial für biologisch recyclingfähige Reaktivfilter, bestehend aus:
- Fasern, ausgewählt aus Naturfasern wie Cellulose, Lignocellulose, Viskose, Wolle, Seide, Papierreststoffe , Pflanzenfasern, Textilrückständen;
- einem Gehalt an biologisch verträglichem anorganischem porösem Stabilisierungszusatz, ausgewählt aus der Gruppe bestehend aus Kalksandstein Dolomit
- einem Gehalt an biologisch verträglichem anorganischem Bindemittel, ausgewählt aus Ca(OH)₂, Zement
- einem Gehalt am Modifikationsmaterial Eisenoxidhydrat und
- einem Gehalt an Thiobacter
- wobei das Modifikationsmaterial als Imprägnierung und Mischung in die Gerüstmaterialausgangsstoffe eingebracht ist,
- wobei das Gerüstmaterial 37% - 45% Fasern und 55% - 63% porösen Stabilisierungszusatz aufweist, und
- wobei die Kombination in feuchter Umgebung strukturstabil ist.

2. Gerüstmaterial nach Anspruch 1, **dadurch gekennzeichnet, dass** es im wesentlichen nicht quellfähig bzw. eine einstellbare Quellfähigkeit hat, aber wasserrückhaltefähig ist.

3. Gerüstmaterial nach einem der vorangehenden Ansprüche, **dadurch gekennzeichnet, dass** das Material in Formkörpern vorliegt.

4. Verwendung des Gerüstmaterials nach einem der vorangehenden Ansprüche als Zuschlagstoff zu Baumaterialien, als Dünger, Bodenstabilisator, Wärme-Dämmstoff, Schalldämmung; als Grundstoff zur Isolierung von Bakterien- und Pilzsporen aus Gasströmen und Filterschüttung zur Gasreinigung.

5. Verfahren zur Herstellung eines Gerüstmaterials nach einem der Ansprüche 1 bis 3, **gekennzeichnet durch**
Mischen von
- Fasern, ausgewählt aus Naturfasern wie Cellulose, Lignocellulose, Viskose, Wolle, Seide, Papierreststoffe , Pflanzenfasern, Textilrückständen
- biologisch verträglichem anorganischem porösem Stabilisierungszusatz, ausgewählt aus der Gruppe bestehend aus Kalksandstein Dolomit, wobei das Gerüstmaterial 37% - 45% Fasern und 55% - 63% porösen Stabilisierungszusatz aufweist,
- biologisch verträglichem anorganischem Bindemittel, ausgewählt aus Ca(OH)₂, Zement
- Eisenoxidhydrat
zu einer teigigen Mischung unter Wasserzugabe;
Formen der Mischung in einem Umformvorgang;
Trocknen der Mischung unter Herstellung von Gerüstmaterialkörpern und
Ansiedeln von Thiobactern.

## Claims

1. Framework material for biologically recyclable reactive filters, consisting of:
- fibers, selected from natural fibers such as cellulose, lignocellulose, viscose, wool, silk, paper residue material, plant fibers, textile residue materials;
- a content of a biologically compatible inorganic porous stabilizing additive, selected from the group consisting of sand-lime stone, dolomite,
- a content of a biologically compatible inorganic binding agent, selected from Ca(OH)₂, cement,
- a content of the modification material iron hydroxide, and
- a content of thiobacteria,
- wherein the modification material is introduced into the base material of the framework material as an impregnation and mixture,
- wherein the framework material comprises 37% - 45% fibers and 55% - 63% porous stabilizing additive, and
- wherein the combination is structurally stable in moist environment.

2. Framework material according to claim 1, **characterized in that** it is substantially non-swellable or **in that** it has an adjustable swelling capacity while at the same time it still has water retention capacity.

3. Framework material according to one of the preceding claims, **characterized in that** the material is present in the form of molded bodies.

4. Use of the framework material according to one of the preceding claims as an aggregate to be added to construction materials, as a fertilizer, soil stabilizer, heat insulator, sound insulator; as a basic material for isolating bacterial and fungal spores from gas flows and as filter bed for gas purification.

5. Method for manufacturing a framework material according to one of the claims 1 to 3, **characterized by**
mixing
- fibers, selected from natural fibers such as cellulose, lignocellulose, viscose, wool, silk, paper residue material, plant fibers, textile residue materials;
- a biologically compatible inorganic porous stabilizing additive, selected from the group comprising lime-sand stone, dolomite, wherein the framework material comprises 37% - 45% fibers and 55% - 63% porous stabilizing additive, and
- a biologically compatible inorganic binding agent, selected from Ca(OH)₂, clement,
- iron hydroxide
so as to form a dough-like mixture when water is added; moulding the mixture in a forming process;
drying the mixture to produce framework material bodies and colonization with thioba-cteria.

## Revendications

1. Matériel de structure pour filtres réactifs biologiquement recyclables, composé par::
- fibres sélectionné de fibres naturelles, comme la cellulose, la lignocellulose, la viscose, la laine, la soie, les résidus de papier, les fibres végétales, les résidus textiles;
- une teneur de stabilisants poreux inorganiques biologiquement compatible, sélectionne du groupe composé de silico-calcaire, dolomite
- une teneur d'un liant inorganique biologiquement compatible sélectionné du ciment, Ca(OH)₂
- une teneur d'hydrate d'oxyde de fer comme modificateur et
- une teneur de thiobacter
- où le modificateur est intégré dans les matériel de départ du matériel de structure par imprégnation et de mélange
- où le matériel de structure présente une teneur de 37%-45% en fibres et une teneur de 55%-63% de stabilisant poreux
- où la combinaison est structurellement stable sous des conditions humides.

2. Matériel de structure selon la revendication 1, **caractérisé par le fait qu'**il n'est pas essentiellement gonflable ou présente une capacité de gonflement réglable mais présentant une capacité de rétention d'eau.

3. Matériel de structure selon une des revendications précédentes, **caractérisés par le fait que** le matériel existe sous forme de corps moules.

4. Utilisation du matériel de structure selon une des revendications précédentes comme additif pour des matériaux de construction, des engrais, des stabilisants de sol, des isolants thermiques, des isolations acoustiques; comme matériel de base pour isoler de bactéries et de spores fongiques de flux de gaz et comme matiere de filtrage en vrac servant au nettoyage de gaz.

5. Procédure pour la fabrication d'un matériel de structure selon une des revendications 1 à 3 **caractérisée par**
mélanger pour fabriquer un mélange pâteux par l'ajout d'eau :
- fibres sélectionnées de fibres naturelles comme la cellulose, la lignocellulose, la viscose, la laine, la soie, les résidus de papier, les fibres végétales, les résidus textiles;
- un stabilisant anorganique, poreux et biologiquement compatible sélectionne du groupe composé de silico-calcaire, dolomite
- où le matériel du structure présente une teneur de 37%-45% en fibres et une teneur de 55%-63% en additif stabilisant
- un liant inorganique biologiquement compatible sélectionné du ciment, Ca(OH)₂
- l'hydrate de l'oxyde de fer
formage du mélange dans un procédé de transformation
séchage du mélange en fabricant des corps de structure moules et
implantation de thiobacter
